# EUROPÄISCHE PATENTSCHRIFT

(11) **EP 3 119 579 B1**
(45) Veröffentlichungstag und Bekanntmachung des Hinweises auf die Patenterteilung: **09.05.2018**
(21) Anmeldenummer: 15710511.5
(22) Anmeldetag: 18.03.2015
(51) Int. Cl.: B29C 43/22, B29C 70/50, E06B 3/277

(54) **VERFAHREN ZUR HERSTELLUNG EINES ISOLIERSTEGS**
METHOD FOR PRODUCING AN INSULATING WEB
PROCÉDÉ SERVANT À FABRIQUER UNE TRAVERSE ISOLANTE

(30) Priorität: 19.03.2014 DE 102014103727
(43) Veröffentlichungstag der Anmeldung: 25.01.2017
(73) Patentinhaber: Ensinger GmbH, 71154 Nufringen (DE)
(72) Erfinder: KÖNIGSBERGER, Bernhard, 93464 Tiefenbach (DE); PAULUS, Wolfgang, 93462 Lam (DE); LEIMBRINK, Hartmut, 72119 Ammerbuch (DE); SCHNEIDER, Mario, 93489 Schorndorf (DE); STIEHL, Lena, 70178 Stuttgart (DE); LANGE, Guido, 70199 Stuttgart (DE); BERTELE, Josef, 89264 Weissenhorn (DE)
(74) Vertreter: Hoeger, Stellrecht & Partner Patentanwälte mbB
(86) Internationale Anmeldenummer: PCT/EP2015/055693
(87) Internationale Veröffentlichungsnummer: WO 2015/140215

(56) Entgegenhaltungen:
- EP-A2- 2 497 888

## Beschreibung

Die Erfindung betrifft ein Verfahren zur Herstellung eines Isolierstegs für Verbundprofile, wobei der Isoliersteg aus einem thermoplastischen Kunststoffmaterial gefertigt ist und einen streifenförmigen Basiskörper sowie an dessen gegenüberliegenden Längskanten angeformte Anschlussleisten aufweist.

Isolierstege dieser Art werden bei der Herstellung von Verbundprofilen zur schubfesten mechanischen Verbindung und zur thermischen Isolierung von außen und innen anzuordnenden Metallprofilen verwendet, wie sie insbesondere zur Herstellung von Fensterrahmen, Türrahmen, Fassadenelementen und dergleichen im Einsatz sind.

Isolierstege dieser Art sind in mannigfacher Form zum Beispiel auch aus der DE 32 36 357 A1 bekannt, die je nach dem zwischen den Metallprofilen des Verbundprofils geforderten Abstand in entsprechender Breite gefertigt werden.

Herkömmlich weisen die Isolierstege einen im Wesentlichen planen Basiskörper auf. In jüngerer Zeit wurde vorgeschlagen, Isolierstege mit einem strukturierten Basiskörper zu verwenden, um eine Verbesserung der Wärmedämmung zu erzielen, ohne dass die statische Festigkeit der Verbundprofils verringert wird (vgl. zum Beispiel EP 2 497 888 A2).

Zur Verbesserung der Wärmedämmeigenschaften der so gebildeten Verbundprofile wurde in der EP 2 497 888 A2 unter anderem vorgeschlagen, den Basiskörper mit einer in Längsrichtung des Isolierstegs gesehen quer verlaufenden Rippenstruktur zu versehen. Die damit erzielbare Verbesserung der Wärmedämmung resultiert zum einen daraus, dass aufgrund der Rippenstruktur die Weglänge, die der Isoliersteg für die Wärmeleitung von einem Metallprofil zum andern bietet, vergrößert wird. Andererseits wird durch die Rippenstruktur die Steifigkeit des Isolierstegs verbessert, so dass bei gleichen mechanischen Eigenschaften geringere Wandstärken bei dem Basiskörper des Isolierstegs möglich sind, so dass der für die Wärmeleitung beim Isoliersteg verfügbare Querschnitt zusätzlich vermindert werden kann.

Darüber hinaus werden sowohl geringere Wärmestrahlungsverluste als auch Wärmekonvektionsverluste durch den Einsatz solcher Isolierstege erwartet.

Im Prinzip kann diese Art von Isolierstegen durch eine spanende Bearbeitung aus einem mit einem im Wesentlichen planen Basiskörper hergestellten Isoliersteg gebildet werden oder in der endgültigen Struktur im Prinzip auch im Spritzguss hergestellt werden.

Die spanende Bearbeitung ist allerdings nicht nur zeitaufwändig, sondern verlangt auch einen höheren Materialeinsatz. Das Spritzgussverfahren andererseits stößt sehr schnell an seine Grenzen, da die Isolierstege üblicherweise als Meterware, z.B. mit einer Länge von 6 m, hergestellt werden. Die hierzu benötigten Spritzgusswerkzeuge sind nicht nur extrem teuer, sondern auch problematisch hinsichtlich einer ausreichend gleichmäßigen Befüllung der Werkzeuge bei den geforderten Isoliersteglängen.

Des Weiteren ist ein kombiniertes Verfahren basierend auf Spritzguss und Extrusion bekannt (WO 2007/128787 A1), mittels dessen profilierte längliche Bauteile gefertigt werden können. Nachteilig bei dem dort beschriebenen Verfahren wirkt sich aus, dass die benötigten Werkzeuge für eine Anwendung auf in dieser Anmeldung beschriebene Produkte eine sehr große Längsausdehnung erfordern und deshalb aufwändig und unverhältnismäßig teuer sind. Zwar könnten die beschriebenen Strukturen theoretisch gefertigt werden. Allerdings nur mit zusätzlichen Arbeitsschritten, die ein zeitlich zum Formfüllvorgang nachgeschaltetes Umformen während der Abkühlung des Produktes oder spanende Bearbeitung verlangen.

Bei den Isolierstegen ist die Einhaltung einer geringen Toleranz bei den Abmessungen der Anschlussleisten wichtig, da letztere bei der Verarbeitung zu Verbundprofilen in komplementär ausgebildete Aufnahmen auf Seiten der Metallprofile eingeschoben werden müssen. Um eine möglichst gute, insbesondere schubfeste, Verbindung der Isolierstege mit den Metallprofilen zu gewährleisten, weichen die Abmessungen des Querschnitts der Aufnahmen von denen der Anschlussleisten nur geringfügig ab. Ein Herstellungsverfahren für die strukturierten Isolierstege muss deshalb insbesondere auch die Gewähr bieten, dass die Toleranzvorgaben für die Anschlussleisten eingehalten werden können.

Aufgabe der Erfindung ist es, ein Verfahren vorzuschlagen, mit dem die bekannten Isolierstege mit einer Rippenstruktur des Basiskörpers wirtschaftlich hergestellt werden können.

Diese Aufgabe wird erfindungsgemäß durch ein Verfahren wie in Anspruch 1 definiert gelöst.

Der Isoliersteg wird zunächst als Rohling mit einem im Wesentlichen ebenen, streifenförmigen Basiskörper und den bevorzugt schon in der endgültigen Geometrie ausgeformten Anschlussleisten, beispielsweise in einem Extrusionsverfahren, hergestellt. Die Anschlussleisten stehen von den Längskanten des Basiskörpers typischerweise in einer Richtung parallel zur Ebene des Basiskörpers, gegebenenfalls abgekröpft, ab.

Der Isoliersteg-Rohling wird zunächst auf eine Temperatur abgekühlt, die der maximalen Dauergebrauchstemperatur oder weniger entspricht, wobei als maximale Dauergebrauchstemperatur eine Temperatur gemäß DIN 53476 verstanden wird.

Dies lässt eine einfache Handhabung der Rohlinge zu und erleichtert die Steuerung des Prozessablaufs der vorliegenden Erfindung, da die Folgeschritte nach Ausbildung des Rohlings bei Bedarf zeitlich entkoppelt durchgeführt werden können. Bei dieser Temperaturvorgabe ist zudem sichergestellt, dass die Anschlussleistengeometrie in der ursprünglichen Präzision erhalten bleiben kann. Insbesondere findet eine Abkühlung der Isoliersteg-Rohlinge auf ca. 50 °C oder weniger statt. In diesem Fall ist auch ein händisches Verfahren beim Einführen der Rohlinge in die Vorrichtung zum Erwärmen und Umformen der Isoliersteg-Rohlinge möglich.

Durch die gezielte Erwärmung des Basiskörpers des Isoliersteg-Rohlings, dessen anschließende Umformung mittels eines Werkzeuges und die danach folgende Abkühlung kann ein Isoliersteg der eingangs genannten Art erhalten werden, bei dem die an den Längskanten vorhandenen Anschlussleisten noch eine ausreichende Genauigkeit in ihrer Geometrie aufweisen, so dass auch ohne Nachbearbeitung die Toleranzvorgaben eingehalten werden und die Isolierstege einfach mit den Metallprofilen zu einem Verbundprofil verarbeitet werden können.

Die Umformung des Basiskörpers geschieht bei einer Temperatur, die sich bei (teil)kristallinen Kunststoffmaterialien an der Kristallitschmelztemperatur orientiert. Als Kristallitschmelztemperatur wird im Zusammenhang mit der vorliegenden Erfindung die Temperatur verstanden, bei der der Kurvenverlauf bei einer DSC-Messung gemäß DIN EN ISO 11357-3 den (ersten) endothermen Peak erreicht.

Der Basiskörper wird auf eine Temperatur im Bereich von ca. 30 °C unterhalb der Kristallitschmelztemperatur oder eine höhere Temperatur erwärmt, bevor er der Umformung unterworfen wird.

Bevorzugt wird die Umformtemperatur auf einen Wert bis ca. 50 °C oberhalb der Kristallitschmelztemperatur beschränkt.

Bei der Verwendung von amorphen Kunststoffmaterialien wird der Basiskörper auf eine Umformtemperatur erwärmt, welche ca. 30 °C oberhalb der Erweichungstemperatur (DIN EN ISO 306 VST A120) oder höher liegt.

Bevorzugt wird hier die Umformtemperatur auf einen Wert bis ca. 60 °C oberhalb der Erweichungstemperatur beschränkt.

Gleichzeitig lässt sich mit diesen Maßgaben für die Umformtemperatur die beim Rohling schon vorhandene Geometrie der Anschlussleisten wie oben beschrieben ohne allzu großen Aufwand erhalten.

Eine Umformung von Kunststoffstegen zu strukturierten, Wellblechstreifen ähnlichen Stegen ist zwar aus der DE 28 50 428 bekannt. Jedoch wird dort das Profil in seiner gesamten Breite umgeformt, so dass die im vorliegenden Fall bestehende Notwendigkeit des Erhalts der Geometrie der Anschlussleisten dort nicht gefordert und nicht zu berücksichtigen war. Erst danach wird gemäß diesem Stand der Technik durch Abkanten ein C-förmiger Querschnitt der Kunststoffstege erzielt.

Überraschenderweise gelingt es mit dem erfindungsgemäßen Verfahren einerseits eine ausreichend ausgeprägte Struktur des Basiskörpers der Isolierstege mit einem wirtschaftlich vertretbaren Aufwand zu schaffen, gleichzeitig aber die Maßhaltigkeit der Geometrie der Anschlussleisten zu gewährleisten, so dass die Verarbeitung der Isolierstege zu Verbundprofilen ohne weitere Maßnahmen, insbesondere auch ohne Nachbearbeitung der Anschlussleisten, gelingt.

Die gemäß dem erfindungsgemäßen Verfahren umformbaren Isoliersteg-Rohlinge können auch einen wannenförmigen Basiskörper aufweisen, der nach der Umformung mit einem Material hoher Porosität gefüllt und mit weiteren Funktionselementen versehen werden kann, wie dies z.B. aus der DE 198 04 222 C2 bekannt ist. Gegebenenfalls kann die Wannenform des Basiskörpers zusammen mit der Ausformung der Erhebungen und Vertiefungen erzeugt werden.

Des Weiteren lassen sich erfindungsgemäß auch Isolierstege erzeugen, bei denen in den Anschlussleisten sogenannte Dichtdrähte aus Kunststoff schon im Isoliersteg-Rohling eingebracht sind, die bei einer Temperatur im Bereich von ca. 95 °C bis ca. 100 °C schmelzen. Mit diesen Dichtdrähten lässt sich die Schubfestigkeit des fertigen Verbundprofils zusätzlich sichern.

Gemäß einer bevorzugten Ausführungsform des erfindungsgemäßen Verfahrens werden beim Umformen alternierende Erhebungen und Vertiefungen, in Längsrichtung des Basiskörpers gesehen, in regelmäßigen Abständen ausgebildet.

Weiter bevorzugt werden die Erhebungen und Vertiefungen beim Umformen derart ausgebildet, dass sie sich im Wesentlichen über die gesamte Breite des Basiskörpers erstrecken. So lässt sich eine optimale Wärmedämmung mit den erfindungsgemäß hergestellten Isolierstegen erzielen.

Weiter bevorzugt werden die Erhebungen und Vertiefungen im Wesentlichen senkrecht zur Längsrichtung des Isolierstegs ausgerichtet. Damit wird ein maximaler Effekt der Aussteifung der Isolierstege bezüglich senkrecht zur Ebene des Basiskörpers einwirkender Kräfte erzielt. Außerdem wird eine Stabilisierung gegen einen sogenannten Verschub erreicht, so dass im Fall, dass auf die beiden Anschlussleisten in Längsrichtung des Isolierstegs unterschiedlich große Kräfte einwirken, einer Verformung des Isolierstegs entgegengewirkt wird.

Vorzugsweise wird durch die Ausformung der Erhebungen bzw. Vertiefungen eine Struktur geschaffen, bei der den Erhebungen und den Vertiefungen zuzurechnende Flächenbereiche von der mittleren Ebene des Basiskörpers des Isolierstegs um das ca. 0,5-fache bis um das ca. 2-fache der Dicke des Basiskörpers abweichen. Innerhalb dieser Grenzen wird zum einen ein deutlicher Effekt bezüglich der Verbesserung der Wärmedämmung, der Verbesserung der mechanischen Festigkeit und damit der Möglichkeit der Materialeinsparung erzielt, andererseits das Kunststoffmaterial bei der Umformung nicht übermäßig beansprucht, so dass die Dauerbelastbarkeit der Isolierstege gewährleistet bleibt. Weiter bevorzugt beträgt die Abweichung das ca. 0,7-fache bis ca. 1,3-fache.

Als thermoplastisches Kunststoffmaterial für die Isolierstege wird vorzugsweise ein Material verwendet, welches ausgewählt ist aus Polyamiden (PA), insbesondere PA 12 und PA 6.6, Polypropylen (PP), Acrylnitril-Butadien-Styrol-Copolymeren (ABS), Polyphenylenether (PPE), syndiotaktisches Polystyrol (sPS), Polyvinylchlorid (PVC), Polyester, insbesondere Polyethylenterephthalat (PET) und Polybutylenterephthalat (PBT), Polyketone, thermoplastische Polyurethane (TPU) sowie Blends der vorgenannten Polymeren.

Für diese bevorzugten Kunststoffmaterialien ergeben sich die Kristallitschmelztemperaturen bzw. die Erweichungstemperaturen und die maximalen Dauergebrauchstemperaturen in etwa wie folgt:

| Kunststoffmaterial | Kristallitschmelztemperatur [°C] | Erweichungstemperatur [°C] | Max. Dauergebrauchstemperatur [°C] |
|---|---|---|---|
| Polyamid 6.6 | ca. 250 | - | ca. 100 |
| Polyamid 6.6 GF25 | ca. 250 | - | ca. 100 |
| Polyamid 12 | ca. 180 | - | ca. 100 |
| Polypropylen | ca. 160 | - | ca. 100 |
| ABS | - | ca. 100 | ca. 75 |
| Polyphenylenether | - | ca. 120 | ca. 85 |
| Polyester (PET) | ca. 250 | - | ca. 100 |
| Polyester (PBT) | ca. 220 | - | ca. 100 |
| Polyketon | ca. 220 | - | ca. 100 |

Das Kunststoffmaterial kann als kompaktes, im Wesentlichen porenfreies Material im Isoliersteg vorliegen. Hier sind die Porosität bzw. das Porenvolumen geringer als ca. 3 Vol.-%.

Eine Verbesserung der Wärmedämmeigenschaften der Isolierstege lässt sich in vielen Fällen erzielen, ohne dass die mechanische Fähigkeit der Isolierstege ungenügend ist, wenn das Kunststoffmaterial zumindest in einem Teilbereich des Isolierstegs, insbesondere im Basiskörper, als poröses Material vorliegt. Vorzugsweise beträgt dabei das Porenvolumen ca. 5 bis ca. 30 Vol.-%, weiter bevorzugt ca. 5 bis ca. 25 Vol.-% und am meisten bevorzugt ca. 5 bis ca. 20 Vol.-%.

Bevorzugt weist das poröse Kunststoffmaterial des Isolierstegs eine mittlere Porengröße von ca. 5 µm bis ca. 150 µm, weiter bevorzugt von ca. 20 µm bis ca. 140 µm auf.

Die Porosität des Kunststoffmaterials des Isolierstegs kann durch die Verwendung eines porösen Ausgangsmaterials erzielt werden oder aber auch erst bei der Erwärmung des Isolierstegrohlings auf die Umformtemperatur erzeugt werden.

Weiter bevorzugt kann das thermoplastische Kunststoffmaterial ein oder mehrere Additive enthalten, insbesondere ausgewählt aus Glasfasern, Mineralfasern, Kunststofffasern, insbesondere Aramidfasern, Kohlefasern, Glashohlkugeln, Brandschutzmitteln, insbesondere Magnesium-Hydroxid, Aluminium-Hydroxid, Melaminderivate, roter Phosphor, anorganische und organische Phosphate, sowie Bläh- und Treibmittel.

Eine besondere Bedeutung haben faserförmige Füllstoffe als Additive. Diese lassen sich in unterschiedlicher Form in die Kunststoffmaterialien und die daraus geformten Isolierstege einbetten. Insbesondere bevorzugt sind Kurz-, Lang- und Endlosfasern, die zum Einen gleichmäßig verteilt in den Isolierstegen oder zumindest in dem Basiskörper angeordnet werden können oder zum anderen als zweidimensionale flächige Faserstruktur, insbesondere in Form von Filzen, Fasermatten, Gelegen und Geweben. Darüber hinaus können die faserförmigen Füllstoffe auch in Form von Rovings und Fasersträngen in die Isolierprofile integriert werden.

Besonders bevorzugt werden die faserförmigen Füllstoffe mit einer Vorzugsrichtung, beispielsweise parallel und/oder senkrecht zur Längsrichtung des Isolierstegs, in das Kunststoffmaterial eingebettet.

Faserförmige Füllstoffe lassen sich nicht nur bei kompakten, nicht porösen Kunststoffmaterialien einsetzen, sondern auch bei den oben beschriebenen porösen Materialien, wobei dann auch bei Isolierstegen, die für die Aufnahme größerer Kräfte konzipiert sind, größere Porenvolumina realisiert werden können.

Weiter bevorzugt wird bei dem erfindungsgemäßen Verfahren ein Isoliersteg gebildet, dessen thermoplastisches Kunststoffmaterial einen handelsüblichen sogenannten Schlagzähmodifier mit umfasst.

Vorzugsweise werden bei dem erfindungsgemäßen Verfahren die Anschlussleisten während des Erwärmens des Basiskörpers gegen Wärmeeintrag gesondert geschützt, wobei die Anschlussleisten weiter bevorzugt auf einer Temperatur gehalten werden, die der Wärmeformbeständigkeitstemperatur (gemessen nach DIN EN ISO 75 bei einer Belastung von 1,8 MPa) des Kunststoffmaterials oder weniger entspricht. Vorzugsweise wird die Temperatur, die die Anschlussleisten während der Erwärmung zur Umformung erreichen, auf die für das Kunststoffmaterial ausgewiesene maximale Dauergebrauchstemperatur beschränkt.

Die Erwärmung des Basiskörpers kann mittels Strahlung, Konvektion, Ultraschall oder auch Kontaktwärme erfolgen, wobei eine Temperatur im Bereich von ca. 30 °C unterhalb der Kristallitschmelztemperatur bis ca. 50 °C oberhalb der Kristallitschmelztemperatur erreicht werden sollte. Bevorzugt wird bei der Erwärmung des Basiskörpers vor der Umformung eine Temperatur im Bereich von ca. ± 25 °C um die Kristallitschmelztemperatur erreicht.

Beispielsweise beträgt bei einem Polyamid 6.6 mit einem Glasfasergehalt von 25 Gew.-% mit einer Kristallitschmelztemperatur von ca. 250 °C eine bevorzugte Umformtemperatur des Basiskörpers ca. 220 °C oder mehr.

Bei ABS-Materialien mit einer Erweichungstemperatur von ca. 100 °C wird als Umformtemperatur eine Temperatur von ca. 130 °C oder mehr gewählt, insbesondere wird die Temperatur im Bereich von 130 °C bis ca. 160 °C gewählt.

Für die Erwärmung des Isoliersteg-Rohlings stehen insbesondere Strahlung, Konvektion, Ultraschall oder Kontaktwärme als geeignete Techniken zur Verfügung.

Wird die Erwärmung mittels Strahlung, insbesondere IR-Strahlung, vorgenommen, kann es schon ausreichend sein, den Strahler so abzuschirmen, dass keine Strahlung direkt auf die Anschlussleisten trifft, um deren Geometrie in ausreichender Genauigkeit zu erhalten.

Der Abstand der Strahler zu dem Isoliersteg sollte ausreichend groß sein oder es sollten andere Vorkehrungen getroffen werden, damit sich kein Hitzestau in der Aufheiz-Vorrichtung entwickeln kann. Vorteilhaft bei der Erwärmung mittels Strahlung ist, dass nicht nur die Oberfläche erwärmt wird, sondern aufgrund der Eindringtiefe der Strahlung das Innere des Basiskörpers selbst. Damit wird der Zeitbedarf für eine gleichmäßige Erwärmung des Basiskörpers über seinen gesamten Querschnitt minimiert.

Eine andere Möglichkeit, die Anschlussleisten vor einer Energieeinleitung zu schützen, besteht darin, diese in einer Führung aufzunehmen, die zwar den Basiskörper im Wesentlichen frei lässt, andererseits die Anschlussleisten möglichst vollständig überlappt. Gegebenenfalls können die Führungen gekühlt werden, so dass eine noch bessere Abgrenzung des Energieeintrags gegenüber dem Basiskörper erzielt werden kann.

Bei einer Erwärmung mittels Konvektoren geschieht die Aufheizung des Basiskörpers vergleichsweise langsam und sehr schonend. Weniger günstig ist bei dieser Variante der größere Zeitaufwand.

Eine Energieeinleitung mittels Kontakterwärmung ist erfindungsgemäß ebenfalls möglich, wobei sich hier anfänglich über den Querschnitt des Basiskörpers gesehen ein größerer Temperaturgradient einstellt. Der Zeitbedarf der Kontakterwärmung liegt zwischen dem Zeitbedarf der Strahlungserwärmung und dem der Erwärmung mittels Konvektion.

Weiter bevorzugt wird der Energieeintrag beim Erwärmen des Basiskörpers auf zwei gegenüberliegenden Seiten des Basiskörpers vorgenommen, so dass sich eine schnellere und überdies gleichmäßige Erwärmung des Basiskörpers vor dem Umformvorgang ergibt.

Darüber hinaus kann die Erwärmung der Basisstruktur in zwei oder mehr Stufen erfolgen, wodurch eine besonders gute Einhaltung der Temperaturvorgaben möglich wird. Insbesondere empfiehlt es sich, bei einer zwei- oder mehrstufigen Erwärmung den Energieeintrag in das Kunststoffmaterial in der ersten Stufe höher zu wählen als in der oder den folgenden Stufen. Insbesondere kann für die erste Stufe eine kürzere Zeitspanne vorgegeben werden als für die zweite Stufe.

Vorzugsweise wird das zur Umformung des Basiskörpers verwendete Werkzeug temperiert, wobei die Temperatur des Werkzeugs insbesondere auf einer Temperatur gehalten wird, die ca. 120 °C oder weniger beträgt, weiter bevorzugt ca. 100 °C oder weniger, am meisten bevorzugt ca. 90 °C oder weniger.

Weiter bevorzugt wird das Werkzeug konstant auf einer Temperatur im Bereich von ca. 50 °C bis ca. 120 °C gehalten, bevorzugt im Bereich von ca. 50 °C bis ca. 80 °C gehalten.

Beispielsweise eignet sich bei der Verarbeitung von Polyamid 6.6 mit einem Glasfasergehalt von 25 Gew.-% eine Werkzeugtemperatur von ca. 50 °C bis ca. 80 °C.

Die Umformung selbst kann insbesondere als Tiefziehverfahren oder als Druckluftumformung durchgeführt werden.

Für die Umformung wird vorzugsweise ein Prägewerkzeug eingesetzt, insbesondere in Form eines Prägestempels, eines Prägerades oder eines mehrgliedrigen, insbesondere kettenförmigen Prägewerkzeugs.

Die Umformung kann dabei intermittierend oder auch kontinuierlich durchgeführt werden, wobei auch bei der Verwendung eines Prägestempels ein kontinuierlicher Vorgang, insbesondere durch ein Mitfahren des Prägestempels während des Durchlaufens des Isolierstegs durch die Umformvorrichtung, realisiert werden kann.

Weiter bevorzugt wird der Isoliersteg-Rohling zunächst einer Trocknung unterworfen, bevor die Erwärmung auf die Umformtemperatur und die Umformung durchgeführt wird. Neben einer Umformung des Isoliersteg-Rohlings direkt zu dem gewünschten strukturierten Isoliersteg in einem Schritt kann eine Umformung des Rohlings in den strukturierten Isoliersteg in mehreren Schritten hintereinander durchgeführt werden.

Alternativ können gemäß dem erfindungsgemäßen Verfahren die Isoliersteg-Rohlinge aus dem Fertigungsprozess (z.B. durch Extrusion) direkt mit einem Restwärmegehalt der Umformung im zweiten Schritt unterworfen werden, wodurch eine günstigere Energiebilanz des erfindungsgemäßen Herstellverfahrens erzielt wird.

Weiter bevorzugt werden gemäß dem erfindungsgemäßen Verfahren mehrere Isolierstege nebeneinander in einer Umformvorrichtung umgeformt, so dass platzsparend ein erheblich größerer Durchsatz bei der Herstellung der kontrollierten Isolierstege erzielbar ist.

Diese und weitere Vorteile der vorliegenden Erfindung werden im Folgenden anhand der Zeichnungen und der Ausführungsbeispiele noch näher beschrieben.

Es zeigen im Einzelnen:
- Fig. 1A: Eine perspektivische Darstellung eines erfindungsgemäß hergestellten Isolierstegs;
- Fig. 1B: eine Schnittansicht längs Linie IB-IB durch den Isoliersteg der Fig. 1A;
- Fig. 2: eine schematische Darstellung der Schritte einer bevorzugten Ausführungsform des erfindungsgemäßen Verfahrens;
- Fig. 3: eine erste Prägevorrichtung zur Durchführung des erfindungsgemäßen Verfahrens in schematischer Darstellung;
- Fig. 4: eine Teilansicht der Prägevorrichtung der Figur 3;
- Fig. 5: eine zweite Prägevorrichtung zur Durchführung des erfindungsgemäßen Verfahrens;
- Fig. 6: eine dritte Prägevorrichtung zur Durchführung des erfindungsgemäßen Verfahrens;
- Fig. 7: eine vierte Prägevorrichtung zur Durchführung des erfindungsgemäßen Verfahrens;
- Fig. 8A: ein Prägewerkzeug zur Verwendung in der Prägevorrichtung der Figur 7;
- Fig. 8B: ein alternatives Prägewerkzeug zur Verwendung in der Prägevorrichtung der Figur 7; und
- Fig. 8C: eine weitere Variante des Prägewerkzeugs der Figur 8B.

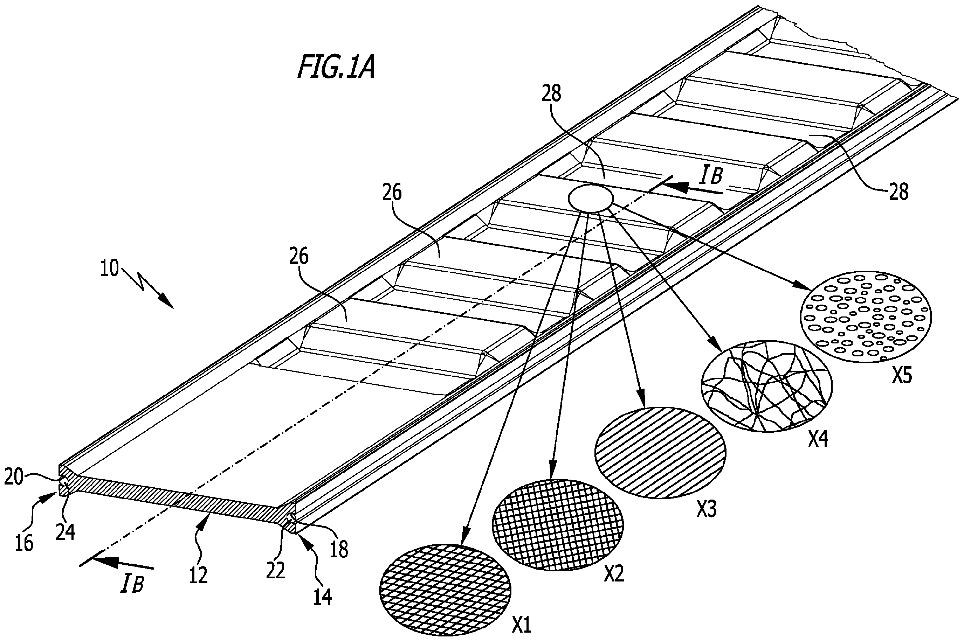

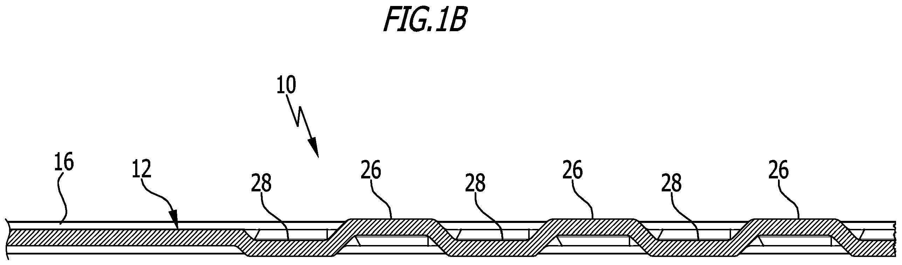

Die Figuren 1A und 1B zeigen einen Isoliersteg 10 mit einem streifenförmigen Basiskörper 12 sowie an dessen gegenüberliegenden Längskanten angeformte Anschlussleisten 14, 16, mit denen der Isoliersteg in entsprechende Aufnahmen von Metallprofilen einführbar ist und in einem Reib-, Kraft- oder Formschluss gehalten werden kann. In den Anschlussleisten sind wie gezeigt optional stirnseitige Ausnehmungen 18, 20 ausgebildet, in denen sogenannte Dichtdrähte 22, 24 aus Kunststoff eingesetzt werden können.

Die entsprechenden Aufnahmen seitens der Metallprofile (nicht gezeigt) sind an die in den vorliegenden Beispielen eine Trapezform aufweisenden Querschnitte der Anschlussleisten 14, 16 angepasst, so dass in einem sogenannten Einrollschritt nur eine geringfügige Verformung der Aufnahmen der Metallteile notwendig ist, um eine ausreichend schubfeste Verbindung zwischen dem Isoliersteg und dem jeweiligen Metallprofil herzustellen. Die Schubfestigkeit des Verbundes kann durch eine Aktivierung der Dichtdrähte 22, 24 zusätzlich gesichert werden.

Dementsprechend ist es von herausragender Bedeutung, dass die Anschlussleisten 14, 16 eine definierte Geometrie mit nur geringen Toleranzen aufweisen. Dies gilt insbesondere für die Verarbeitung von Isolierstegen zu größeren Fenster-, Türen- oder Fassadenelementen, bei denen Abschnitte der Isolierstege und der entsprechenden Metallprofile in einer Länge von 1 bis 2 m oder auch mehr verbaut werden müssen.

Der Isoliersteg 10 ist im linken Teil der Figuren 1A und 1B als Rohling dargestellt. Im sich rechts daran anschließenden Teil zeigen die Darstellungen den streifenförmigen Basiskörper 12 mit der nach dem erfindungsgemäßen Verfahren, das im Folgenden noch näher beschrieben werden wird, umgeformten Struktur mit alternierenden Erhebungen 26 und Vertiefungen 28. Aufgrund der Struktur des streifenförmigen Basiskörpers 12 mit Erhebungen 26 und Vertiefungen 28 lässt sich die Wandstärke des streifenförmigen Basiskörpers 12 gegenüber herkömmlichen Isolierstegen vermindern, da über die Ausformung der Erhebungen 26 und Vertiefungen 28 eine zusätzliche Verbesserung der mechanischen Eigenschaften des Isolierstegs 10 insgesamt erzielt wird. Dies führt nicht nur zu einer Materialeinsparung bei der Herstellung der Isolierstege 10, sondern zusätzlich zu einer Erhöhung des Wärmedurchgangswiderstandes und damit zu einer Verbesserung der Wärmedämmung der mit dem erfindungsgemäß hergestellten Isoliersteg 10 erhaltenen Verbundprofile.

In der Figur 1A sind in den vergrößerten Darstellungen X1 bis X5 verschiedene Strukturen im Innern des Basiskörpers 12 schematisch dargestellt.

In den Darstellungen X1 bis X4 sind verschiedene Beispiele der Anordnung von Verstärkungsfasern im Kunststoffmaterial des Basiskörpers 12 dargestellt. In der Darstellung X5 ist schematisch eine poröse Struktur gezeigt.

Die Darstellung X1 zeigt ein faserverstärktes Kunststoffmaterial, bei dem die Orientierung der Fasern parallel und senkrecht zur Längsrichtung des Isolierstegs 10 vorgenommen wurde. Die Verstärkungsfasern können beispielsweise als Gewebe in das Kunststoffmaterial eingebettet werden.

Die Darstellung X2 zeigt ein faserverstärktes Kunststoffmaterial, bei dem die Orientierung der Fasern in zwei senkrecht zueinander laufenden Richtungen erfolgt, die jeweils einen Winkel von ca. 45° zur Längsrichtung des Isolierstegs 10 aufweisen. Auch hier können die Verstärkungsfasern als Gewebe in das Kunststoffmaterial eingearbeitet sein.

Die Darstellung X3 zeigt parallel zur Längsrichtung des Isolierstegs 10 verlaufende Verstärkungsfasern in dem Kunststoffmaterial, wobei hier Einzelfasern, insbesondere Langfasern oder auch Faserstränge, zum Einsatz kommen können.

Die Darstellung X4 zeigt Verstärkungsfasern, die in Form eines Wirrgeleges in das Kunststoffmaterial des Basiskörpers eingebettet sind.

Die Darstellung X5 zeigt eine poröse Struktur im Innern des Basiskörpers.

Das Vorhandensein der Verstärkungsfasern im Fall der Darstellungen X1 bis X4 ist nicht notwendigerweise an der Oberfläche des Basiskörpers sichtbar. Die Anordnung der Verstärkungsfasern lässt sich in vielen Fällen auf den inneren Bereich der Isolierstege 10 beschränken.

Entsprechendes gilt auch für die in der Darstellung X5 gezeigte Porenstruktur, die sich auf einen Kernbereich des Basiskörpers 12 bzw. des Isolierstegs 10 beschränken kann. Alternativ kann sich die Porenstruktur auch bis zur Oberfläche des Isolierstegs 10 erstrecken.

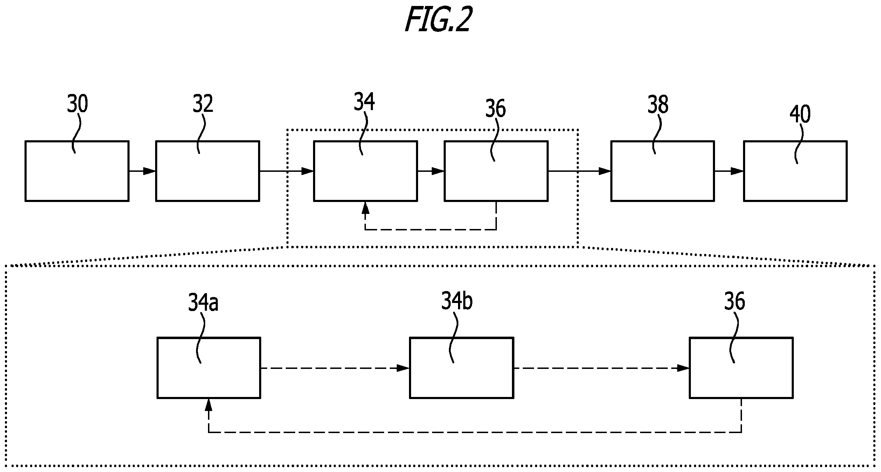

Anhand der Figur 2 sei zunächst eine erste Variante des erfindungsgemäßen Verfahrens zur Herstellung eines Isolierstegs 10 beschrieben, bei dem in einem ersten Verfahrensschritt 30 eine Extrusion eines Isolierstegs mit einem im Wesentlichen ebenen, streifenförmigen Basiskörper 12 erfolgt, an dessen Längskanten die Anschlussleisten 14, 16 schon vollständig und in ihrer endgültigen Geometrie ausgeformt sind, im Folgenden auch Rohling genannt.

Darauf folgend werden die so erhaltenen Isoliersteg-Rohlinge auf eine Temperatur entsprechend der maximalen Dauergebrauchstemperatur oder niedriger, insbesondere ca. 50 °C oder weniger abgekühlt, gelagert und gegebenenfalls vorgetrocknet (Schritt 32). Gemäß dem erfindungsgemäßen Verfahren werden die im optionalen Schritt 32 gelagerten und gegebenenfalls vorgetrockneten Rohlinge im Schritt 34 einer Aufheizung zugeführt, wobei gezielt das Kunststoffmaterial des Basiskörpers 12 auf eine Umformtemperatur erwärmt wird, und in einem darauf folgenden Schritt 36 dann die Umformung des Basiskörpers 12 zur Erzielung der Erhebungen 26 und Vertiefungen 28 vorgenommen wird. Die Anschlussleisten 14, 16 werden dabei abgeschirmt, so dass kein übermäßiger Energieeintrag erfolgt und diese in ihrer Maßhaltigkeit unbeeinträchtigt bleiben.

Die Umformtemperatur liegt bei (teil)kristallinen Kunststoffmaterialien ca. 30 °C unterhalb der Kristallitschmelztemperatur oder höher, insbesondere in einem Bereich ca. ± 25 °C um die Kristallitschmelztemperatur; bei amorphen Kunststoffmaterialien ca. 30 °C oberhalb der Erweichungstemperatur oder höher.

Die Anschlussleisten 14, 16 werden dabei bevorzugt auf einer Temperatur entsprechend der maximalen Dauergebrauchstemperatur des Kunststoffmaterials oder niedriger gehalten.

Nach der Umformung werden die Isolierstege insgesamt in Schritt 38 auf eine Temperatur entsprechend der maximalen Dauergebrauchstemperatur oder niedriger, insbesondere auf ca. 50 °C oder weniger abgekühlt.

In einem optionalen Schritt können die Profile mit einer Markierung versehen, gebündelt und sonst wie weiter verarbeitet und/oder verpackt werden. In Schritt 40 werden die fertigen Isolierstege 10 bis zum Versand eingelagert.

Die Schrittfolge 34, 36, mit der die Umformung des Basiskörpers 12 des Isolierstegs 10 vorgenommen wird, kann gemäß einer Variante eine zweistufige Aufheizung der Basiskörper 12 der Isolierstege 10 beinhalten, wobei in einem Schritt 34a zunächst mit einer hohen Heizleistung der Basiskörper 12 aufgeheizt wird und in einem nachfolgenden Schritt 34b mit einer geringeren Leistung auf die vorgesehene Endtemperatur für den Umformschritt 36 mittels Prägen aufgeheizt wird.

Vorzugsweise wird im Schritt 36 das verwendete Prägewerkzeug ebenfalls temperiert, jedoch auf eine Temperatur, die geringer ist als die Aufheiztemperatur, die der Basiskörper 12 im Schritt 34 bzw. in den Schritten 34a und 34b erhält.

Vorzugsweise wird bei dem erfindungsgemäßen Verfahren vorgesehen, dass der Isoliersteg 10 in dem Prägewerkzeug im Schritt 36 eine ausreichende Zeit verweilt, so dass eine Abkühlung des Isolierstegs 10 bzw. dessen Basiskörpers 12 in dem Werkzeug erfolgt und anschließend der Isoliersteg 10 mit seinem Basiskörper 12 auf eine Temperatur abgekühlt ist, in der die weitere Handhabung, beispielsweise das Markieren, Beschriften, Bündeln, Verpacken etc., ohne Risiko einer Verformung des Isolierstegs 10 vorgenommen werden kann.

Je nach Ausprägung der Erhebungen 26 und Vertiefungen 28 kann auch vorgesehen sein, dass die Umformung des Basiskörpers 12 des Isolierstegs 10 in zwei oder mehr Schritten erfolgt. Die Schrittfolge 34, 36 wird in solchen Fällen dann zwei- oder mehrfach wiederholt, wobei auch hier die Variante mit einer zwei- oder mehrstufigen Aufheizung 34a, 34b möglich ist.

Während der Aufheizung des Basiskörpers 12 auf die vorgegebene Umformtemperatur werden die Anschlussleisten 14, 16 des Isolierstegs 10, wie schon erwähnt, abgeschirmt, so dass sie sich allenfalls geringfügig erwärmen können und insbesondere eine Verformung derselben vermieden wird. Insbesondere wird darauf geachtet, dass die Schmelztemperatur der Dichtdraht-Materialien nicht erreicht wird, falls die Anschlussleisten 14, 16 mit solchen Dichtdrähten 22, 24 ausgerüstet sind.

Diese Vorgehensweise ermöglicht insbesondere, in den Anschlussleisten 14, 16 sogenannte Dichtdrähte 22, 24 zu verwenden, deren Aktivierungstemperatur oder Schmelzpunkt häufig im Temperaturbereich von ca. 95 °C bis 100 °C liegt.

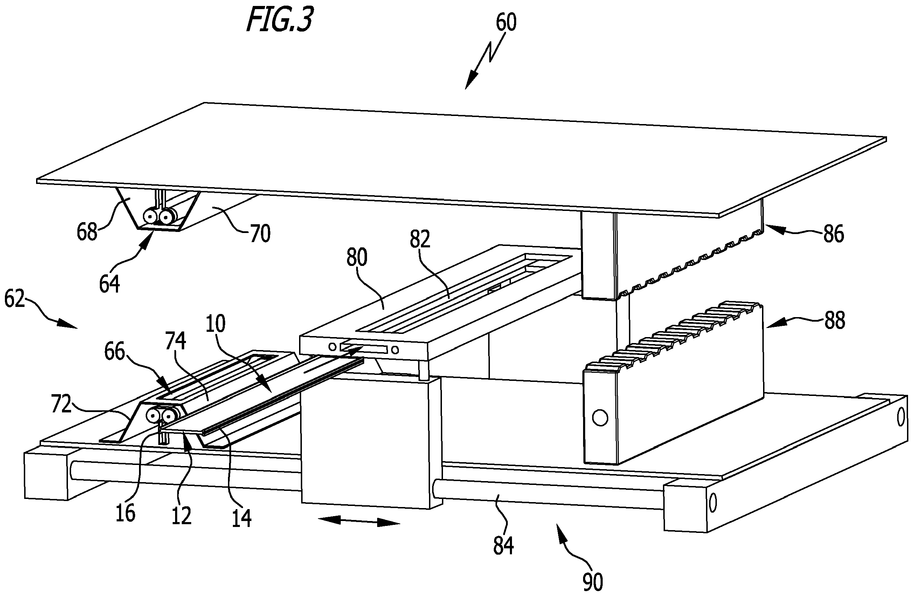

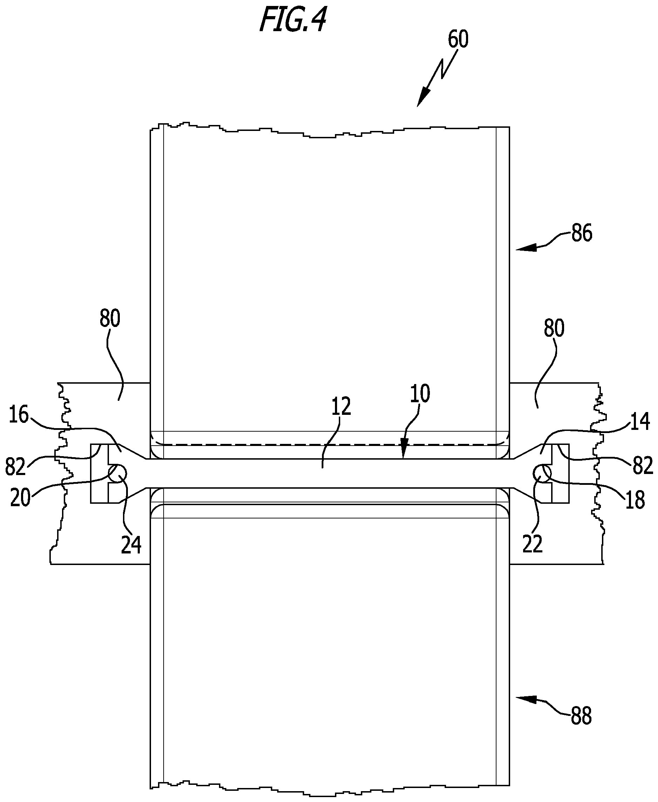

Eine erste Ausführungsform einer Prägevorrichtung 60 ist schematisch in den Figuren 3 und 4 dargestellt.

Die Prägevorrichtung 60 weist eine Aufheizstation 62 mit Infrarotstrahlern 64, 66 auf, die oberhalb und unterhalb einer Ebene der Prägevorrichtung 60 angeordnet sind, in der die Isolierstegrohlinge 10 eingeführt und gehalten werden.

Beidseits der Infrarotstrahler 64, 66 sind jeweils Abschirmungen 68, 70 bzw. 72, 74 angeordnet, die den Energieeintrag auf den Bereich des Basiskörpers 12 des Rohlings 10 beschränken.

Der Isolierstegrohling 10 wird zunächst in einer Halterung 80 platziert, wobei die Anschlussleisten 14, 16 in Führungsschlitzen 82 aufgenommen werden. Die Halterung 80 lässt sich entlang einer Führung 84 aus der Aufwärmposition, in der der Rohling 10 zwischen den Strahlern 64, 66 angeordnet ist, in eine Umformposition verschieben, bei der der Rohling 10 zwischen den Prägematrizen 86, 88 eines Prägewerkzeugs 90 angeordnet ist.

Die Erwärmung des Basiskörpers 12 auf die Umformtemperatur erfolgt gegebenenfalls in zwei oder mehr Stufen. Sehr gute Ergebnisse wurden erzielt, wenn in einem ersten Schritt die Strahler für ca. 5 sec mit im Wesentlichen voller Leistung und danach in einem zweiten Schritt für etwa 40 sec mit etwas weniger als der halben Leistung betrieben wurden. Hierbei wurde eine optimale Durchwärmung des Rohlings im Bereich des Basisteils erzielt.

Wenn der Bereich des Basiskörpers 12 auf die Umformtemperatur aufgeheizt ist, wird der Rohling 10 durch Verschieben der Halterung 80 seitlich in das Prägewerkzeug 90 verlagert, dessen Prägematrizen 86, 88 auf eine vorgegebene, unterhalb der Umformtemperatur liegende Temperatur vorgeheizt in einer Ruheposition angeordnet sind. Nachfolgend werden die Prägematrizen 86, 88 z.B. hydraulisch oder pneumatisch von oben und unten in eine Arbeitsposition verfahren, in der der Basiskörper 12 von den Prägematrizen 86, 88 erfasst und umgeformt wird. Die Haltezeit des Basiskörpers zwischen den Prägematrizen ist relativ unkritisch und kann beispielsweise ca. 20 sec betragen bei einer Prägekraft von ca. 30 kN bei einem Prägewerkzeug, welches eine Prägung von 22 mm Breite und 120 mm Länge erzeugt.

Die Anschlussleisten 14, 16 werden durch die Halterung 80 vor einem übermäßigen Wärmeeintrag geschützt und in den Führungsschlitzen 82 vorzugsweise auch mechanisch gestützt.

Der Rohling 10 verbleibt solange zwischen den zusammengepressten Prägematrizen 86, 88 bis sich die Temperatur des Basiskörpers 12 auf eine Temperatur abgekühlt hat, insbesondere unterhalb der Wärmeformbeständig-keitstemperatur oder bevorzugt auf oder unterhalb der maximalen Gebrauchstemperatur, so dass eine sichere Handhabung des nun fertig geformten Isolierstegs 10 möglich ist.

Figur 4 zeigt die Situation, in der der Rohling 10 zwischen den Prägematrizen 86, 88 des Prägewerkzeugs 90 im Bereich des Basiskörpers 12 eingespannt ist und umgeformt wird.

Im Falle eines aus einem faserverstärkten Polyamid 6.6 GF25-Material (Polyamid 6.6 mit einem Glasfasergehalt von 25 Gew.-%) mit einer Kristallitschmelztemperatur von ca. 250 °C gefertigten Isolierstegrohlings 10 liegt die bevorzugte Umformtemperatur im Bereich von ca. 240 °C bis ca. 250 °C. Die Wärmeformbeständigkeitstemperatur bei diesem Material beträgt ca. 230 °C und die empfohlene maximale Dauergebrauchstemperatur ca. 110 °C. Die Prägematrizen werden bei einer einstufig konzipierten Umformung vorzugsweise auf ca. 50 °C bis ca. 80 °C erwärmt.

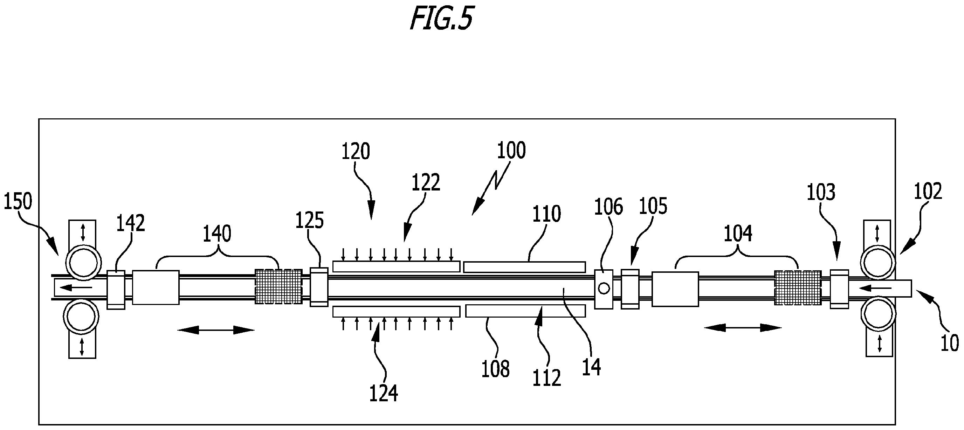

In Figur 5 ist eine zweite Prägevorrichtung 100 zur Durchführung des erfindungsgemäßen Verfahrens in einer bevorzugten Variante schematisch gezeigt.

Die Prägevorrichtung 100 umfasst eine Profilzuführvorrichtung 102 mit der automatisch aus einem Magazin (nicht gezeigt) Isoliersteg-Rohlinge 10 der Prägevorrichtung 100 vereinzelt zugeführt werden. Alternativ kann die Zufuhr auch manuell erfolgen.

Der Rohling 10 wird zunächst von einer Halterung 103 aufgenommen, die den Rohling 10 auch während dem weiteren Vorschub in die Prägevorrichtung 100 hinein führt. In der Ansicht der Figur 5 ist die Stirnseite der Anschlussleiste 14 (ohne Ausnehmung für einen Dichtdraht) gezeigt.

Die Prägevorrichtung 100 weist eine Vorschubvorrichtung 104 auf, die im vorliegenden Ausführungsbeispiel als Zangenvorschub ausgestaltet ist. Der mit der Vorschubvorrichtung 104 erzielbare Vorschub des Isoliersteg-Rohlings 10 ist vorzugweise einstellbar, beispielsweise im Bereich von bis zu 600 mm. Die Einstellung des Vorschubwegs wird vorgenommen unter Berücksichtigung der Länge des Prägewerkzeugs in Vorschubrichtung, welche wiederum von der maximal zur Verfügung stehenden Prägekraft, der Breite des umzuformenden Isolierstegs, der Duktilität des umzuformenden Kunststoffmaterials bei einer vorgegebenen Umformtemperatur etc. abhängt. Gegebenenfalls werden an einander anschließende Abschnitte des Isolierstegs mit einer gewissen Überlappung dem Umformschritt unterworfen, wobei die Überlappung ca. 10 % der Länge des Prägewerkzeugs in Vorschubrichtung oder weniger beträgt.

Am Ende des Vorschubwegs der Vorschubvorrichtung 104 ist eine weitere Halterung 105 vorgesehen, die ebenfalls der Führung des Rohlings 10 in der Prägevorrichtung 100 dient.

Mit dem Zangenvorschub 104 wird der einzelne Isoliersteg, der beispielsweise eine Länge von 6000 mm aufweisen kann, zum Erzielen einer definierten Position entlang der Länge der Prägevorrichtung 100 gegen einen Profilanschlag 106 gefahren, der intermittierend nach dem Einführen eines Rohlings 10 in die Prägevorrichtung 100 die Vorschubbewegung der Vorschubvorrichtung 104 entlang des Förderwegs der Rohlinge 10 blockiert.

An den Profilanschlag 106 schließt sich eine Aufheizvorrichtung 108 an, in der der Isoliersteg-Rohling 10 im Bereich seines Basiskörpers 12 auf die vorgegebene Umformtemperatur, beispielsweise mittels IR-Strahlern, auf einer Länge von beispielsweise 500 mm aufgeheizt wird. Die Aufheizvorrichtung 108 ist vorzugsweise, wie in Figur 5 gezeigt, mit einem Heizelement 110 oberhalb und einem Heizelement 112 unterhalb der Transportebene der Rohlinge 10 ausgestattet, weshalb eine rasche Aufheizung des in die Aufheizvorrichtung 108 eingefahrenen Abschnitts des Rohlings 10 erfolgen kann.

Die Leistung der Strahler lässt sich pro Aufheizzyklus variieren. In einem ersten Zeitabschnitt eines Aufheiztaktes können diese mit einer hohen Leistung betrieben werden, während in einem anschließenden zweiten Zeitabschnitt eine geringere Leistung zugeführt werden kann, da hier im Wesentlichen nur noch ein Temperaturausgleich innerhalb des erwärmten Rohlings zu erzielen ist. Dies kann beispielsweise mit einer getakteten Betriebsweise der IR-Strahler realisiert werden, wobei zur Erzielung eines höheren Energieeintrags eine höhere Taktrate und bei der zweiten Phase eine geringere Taktrate gewählt werden kann.

Ist bei dem aufgeheizten Abschnitt des Rohlings 10 die Umformtemperatur erreicht, wird in einem weiteren Takt der Rohling 10 um die aufgeheizte Abschnittslänge, beispielsweise 500 mm, in Längsrichtung der Prägevorrichtung 100 verschoben, so dass der für die Umformung bereite Abschnitt im Bereich des Prägewerkzeugs 120 in Form von zwei Prägematrizen 122, 124, die zunächst in einer Ruhestellung oberhalb bzw. unterhalb der Transportebene des Rohlings angeordnet sind, positioniert ist. Die Prägematrizen 122, 124 sind vorzugsweise auf eine Temperatur vorgeheizt, die unterhalb der Umformtemperatur liegt. Sobald der umzuformende Abschnitt des Rohlings korrekt positioniert ist, werden die Prägematrizen 122, 124 aus ihrer Ruhestellung in die aktive oder Arbeitsstellung, beispielsweise hydraulisch, überführt.

Da die parallel hierzu stattfindende Aufheizung des folgenden Abschnitts des Rohlings 10 mehr Zeit in Anspruch nimmt als der eigentliche Umformvorgang, kann der umgeformte Abschnitt bei geschlossenen Prägematrizen 122, 124 zwischen den Prägematrizen verbleiben, wodurch ein kontrolliertes Abkühlen des soeben umgeformten Isolierstegabschnitts im Anschluss an die Umformung ermöglicht wird, bevor im nächsten Takt der umgeformte Abschnitt aus dem Prägewerkzeug 120 in Längsrichtung der Prägevorrichtung 100 herausgeschoben wird. Auch diesem kontrollierten Abkühlen dient die Maßnahme der Temperierung der Prägematrizen 122, 124 auf eine Temperatur unterhalb der Umformtemperatur.

Am Ausgang des Prägewerkzeugs 120 ist wiederum eine dem Isoliersteg 10 eine Führung vermittelnde Halterung 125 angeordnet.

Sobald ein umgeformter Abschnitt des Isolierstegs 10 aus dem Prägewerkzeug 120, geführt von der Halterung 125 herausbefördert wird, wird er von einer weiteren Vorschubvorrichtung 140 erfasst, die ebenfalls als Zangenvorschub ausgebildet sein kann, und entlang der Längsrichtung der Prägevorrichtung 100 geführt. Im Anschluss an die Vorschubvorrichtung 140 ist erneut eine Halterung 142 vorgesehen, die den Isoliersteg 10 führt.

Der Isoliersteg 10 verlässt die Prägevorrichtung 100 schließlich durch den Auslass 150, der eine automatisch arbeitende Magazinierung beinhalten kann. Alternativ können die Isolierstege 10 auch manuell aus der Prägevorrichtung 100 am Auslass 150 entnommen werden.

Die Prägevorrichtung lässt sich z.B. mit einer Maschinenlänge von ca. 2500 bis 3000 mm realisieren.

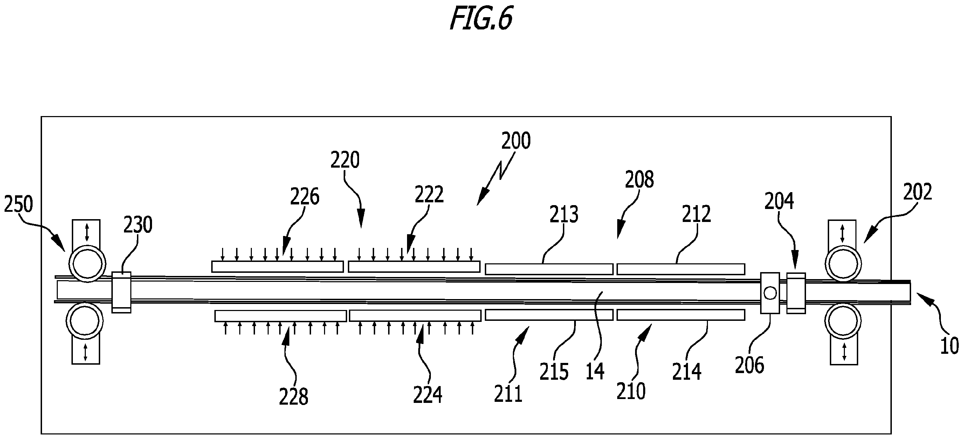

Figur 6 zeigt eine alternative Prägevorrichtung 200, bei der, anders als in der Prägevorrichtung 100, ein zweistufiges Aufheizen der Rohlinge 10 sowie ein Umformen der aufgeheizten Abschnitte der Rohlinge 10 in zwei Stufen erfolgt.

Der Rohling 10 ist in einer Draufsicht auf die Stirnseite der Anschlussleiste 14 (ohne Ausnehmung für einen Dichtdraht) gezeigt.

Auch wenn bei dieser Ausführungsform sowohl das Aufheizen der umzuformenden Abschnitte des Rohlings und die Umformung selbst jeweils in zwei Stufen erfolgt, ist doch die Auslegung einer Prägevorrichtung zur Durchführung des erfindungsgemäßen Verfahrens bezüglich der Erwärmung und der Umformung jeweils unabhängig. Eine zwei- oder mehrstufige Aufheizung verlangt nicht zwingend eine zwei- oder mehrstufige Umformung und umgekehrt.

Die Prägevorrichtung 200 kann wieder mit einer Profilzuführvorrichtung 202 ausgerüstet sein, mit der automatisch aus einem Magazin (nicht gezeigt) Isoliersteg-Rohlinge 10 der Prägevorrichtung 200 vereinzelt zugeführt werden. Alternativ kann die Zufuhr auch manuell erfolgen. Im Anschluss an die Profilzuführvorrichtung 202 wird der Rohling 10 durch eine Halterung 204 geführt.

Bei der Prägevorrichtung 200 dient die Profilzuführvorrichtung 202 mit ihrem Rollenantrieb auch als Vorschubvorrichtung. Der mit der Profilzuführvorrichtung 202 erzielbare Vorschub des Isoliersteg-Rohlings 10 ist vorzugweise einstellbar, beispielsweise im Bereich von 0 bis 1000 mm.

Mit der Profilzuführvorrichtung 202 wird der einzelne Isoliersteg-Rohling 10, der wie erwähnt eine Länge von 6000 mm aufweisen kann, zum Erzielen einer definierten Position entlang der Länge der Prägevorrichtung 200 nach dem Einführen in die Prägevorrichtung 200 zunächst gegen einen Profilanschlag 206 gefahren, der intermittierend die Vorschubbewegung der Rohlinge 10 blockiert.

An den Profilanschlag 206 schließt sich eine Aufheizvorrichtung 208 an, in der der Isoliersteg-Rohling 10 im Bereich seines Basiskörpers 12 auf die vorgegebene Umformtemperatur aufgeheizt wird. Bei der Prägevorrichtung 200 sind zwei in Längsrichtung der Vorrichtung gesehen hintereinander angeordnete Aufheizstationen 210, 211 vorgesehen, die, beispielsweise mit IR-Strahlern bestückt, jeweils auf einer Länge von beispielsweise 500 mm eine stufenweise Erwärmung der Basiskörper 12 der Rohlinge 10 bewirken. Die Aufheizvorrichtung 208 ist vorzugsweise, wie in Figur 6 gezeigt und wie im Zusammenhang mit der Ausführungsform der Figur 5 beschreiben, mit Heizelementen 212, 213 oberhalb und Heizelementen 214, 215 unterhalb der Transportebene der Rohlinge 10 ausgestattet, weshalb eine rasche Aufheizung des in die Heizvorrichtung eingefahrenen Abschnitts des Rohlings 10 erfolgen kann.

Gemäß einer Variante wird die Aufheizung hauptsächlich in der ersten Aufheizstation 210 vorgenommen, während in der zweiten Aufheizstation 211 die Energiezufuhr geringer bemessen werden kann. Insbesondere kann die Erwärmung so geschehen, dass bereits in der ersten Station 210 in den äußeren Schichten des Rohlings 10 die Umformtemperatur, beispielsweise ca. 240 °C, erreicht wird und in der zweiten Aufheizstation 211 nur noch eine Energiezufuhr in dem Maße notwendig ist, um über den gesamten Querschnitt des Basiskörpers 12, also auch im Inneren desselben, die Umformtemperatur zu erreichen.

Ist bei dem aufgeheizten Abschnitt des Rohlings 10 nach der zweiten Aufheizstufe 211 die Umformtemperatur erreicht, wird in einem weiteren Takt der Rohling 10 um dessen aufgeheizte Abschnittslänge, beispielsweise 500 mm, in Längsrichtung der Prägevorrichtung 200 verschoben, so dass der für die Umformung bereite Abschnitt im Bereich des Prägewerkzeugs 220 in Form von zwei Prägematrizenpaaren 222, 224, und 226, 228, die zunächst in einer Ruhestellung oberhalb bzw. unterhalb der Transportebene des Rohlings angeordnet sind, positioniert ist.

Die Prägematrizenpaare 222, 224 und 226, 228 sind vorzugsweise auf Temperaturen vorgeheizt, die jeweils unterhalb der Umformtemperatur liegen. Sobald der umzuformende Abschnitt des Rohlings korrekt positioniert ist, werden die Prägematrizenpaare 222, 224 und 226, 228 aus ihrer Ruhestellung in die aktive oder Arbeitsstellung, beispielsweise hydraulisch, überführt.

Alternativ können Prägematrizen verwendet werden, die sich über die gesamte Länge des umzuformenden Abschnitts des Rohlings 10 erstrecken, wie dies im Zusammenhang mit der Prägevorrichtung 100 der Figur 5 beschreiben wurde.

Da der Zeitbedarf für die parallel hierzu stattfindende Aufheizung des folgenden Abschnitts des Rohlings in den Aufheizstationen 210, 211 größer ist als für den eigentlichen Umformvorgang, kann der umgeformte Abschnitt im geschlossenen Prägewerkzeug 220 verbleiben, wodurch ein kontrolliertes Abkühlen des soeben umgeformten Isolierstegabschnitts im Anschluss an die Umformung möglich ist, bevor im nächsten Takt der umgeformte Abschnitt aus dem Prägewerkzeug 220 in Längsrichtung der Prägevorrichtung 200 herausgeschoben wird. Auch diesem kontrollierten Abkühlen dient die Maßnahme der Temperierung des Prägewerkzeugs 220 bzw. der Prägematrizenpaare 222, 224, und 226, 228 auf eine Temperatur unterhalb der Umformtemperatur.

Entsprechend der Länge der Aufheizstation 208 von beispielsweise 1000 mm wird auch die Länge der Prägewerkzeugs 220 gewählt.

Im Anschluss an das Prägewerkzeug 220 wird der fertig umgeformte Isoliersteg 10 von einer Halterung 230 geführt und schließlich durch den Auslass 250 einer automatisch arbeitenden Magazinierung zugeführt. Alternativ können die Isolierstege 10 auch manuell aus der Prägevorrichtung 200 am Auslass 250 entnommen werden.

Auch in dem vorliegenden Ausführungsbeispiel der Figur 6 beinhaltet der Auslass 250 einen Rollenantrieb, der dem Vorschub des Isolierstegs 10 in Längsrichtung der Prägevorrichtung 200 dient.

Die Prägevorrichtung 200 lässt sich z.B. mit einer Maschinenlänge von ca. 2500 bis 2800 mm realisieren. Die tendenziell etwas geringere Ausdehnung in Längsrichtung gegenüber der Prägevorrichtung 100 der Figur 5 resultiert hauptsächlich aus der Verwendung des Platz sparenderen Rollenvorschubs 202 bzw. 250.

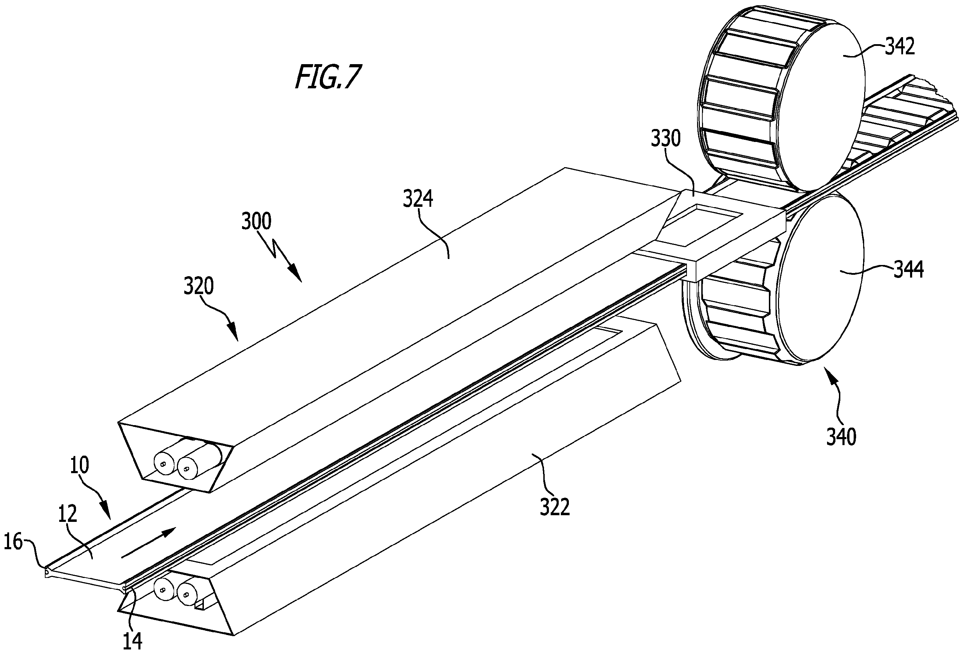

Die Figur 7 zeigt in stark vereinfachter, schematischer Darstellung eine dritte Variante einer Prägevorrichtung 300, die im Gegensatz zu den bisher beschriebenen Ausführungsformen für eine kontinuierliche Verfahrensführung ausgelegt ist. Die Abschirmung der Anschlussleisten ist in der Abbildung der Übersichtlichkeit halber weggelassen.

Die in die Prägevorrichtung 300 eingeführten Rohlinge 10 werden zunächst in eine Aufheizvorrichtung 320 eingeführt, die ein- oder mehrstufig ausgestaltet werden kann. Wiederum sind oberhalb und unterhalb der Transportebene für die Rohlinge 10 Heizelemente 322, 324 vorgesehen, die in Form von IR-Strahlern gezeigt sind.

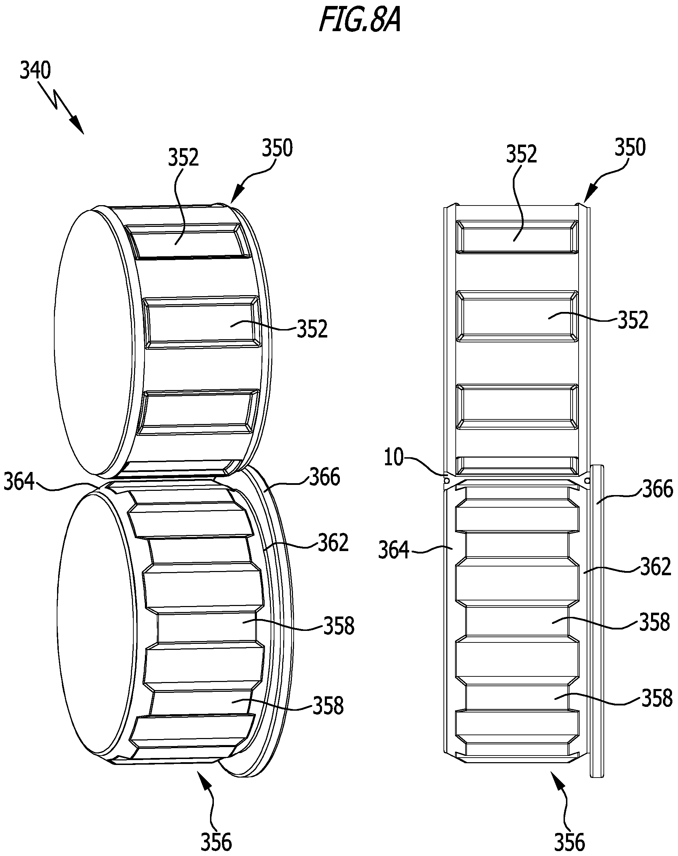

Nachdem ein Aufheizen des Basiskörpers 12 des Rohlings 10 auf die Umformtemperatur erfolgt ist, durchläuft der Rohling 10, geführt von einer Halterung 330, eine Prägestation 340, welche zwei synchron laufende Prägeräder 342, 344 umfasst, die im Zusammenhang mit der Figur 8A noch näher beschrieben werden. Aufgrund der kleineren Kontaktfläche des Prägewerkzeugs mit dem Rohling 10 kann mit erheblich geringeren Kräften die Umformung des Basiskörpers 12 erreicht werden. Auch bei dieser Variante kann eine zwei- oder mehrstufige Umformung vorgenommen werden, wobei dann zwei oder mehr Prägeradpaare 342, 344 nacheinander zum Einsatz kommen.

Bei den Prägeradpaaren 342, 344 weist ein erstes Prägerad 342 an seiner Umfangsfläche 350 Erhebungen 352 auf, während das zweite Prägerad 344 an seiner Umfangsfläche 356 zu den Erhebungen 352 komplementäre Vertiefungen 358 aufweist, in die beim Umformen von den Erhebungen 352 des ersten Prägerades 342 verdrängtes Kunststoffmaterial ausweichen kann (vgl. Figur 8A). In der in der Figur 8A rechts dargestellten Frontansicht ist der Isoliersteg 10 mit abgebildet.

Bevorzugt weisen die Prägeräder 342, 344 an ihren Rändern umlaufende Vertiefungen 362, 364 und gegebenenfalls Vorsprünge 366 auf, die der Führung der Anschlussleisten 14, 16 der Isolierstege 10 dienen. Die Anschlussleistengeometrie wird dadurch gleichzeitig geschützt und gestützt, so dass eine sehr geringe Maßtoleranz bezüglich der Anschlussleisten 14, 16 gewährleistet werden kann.

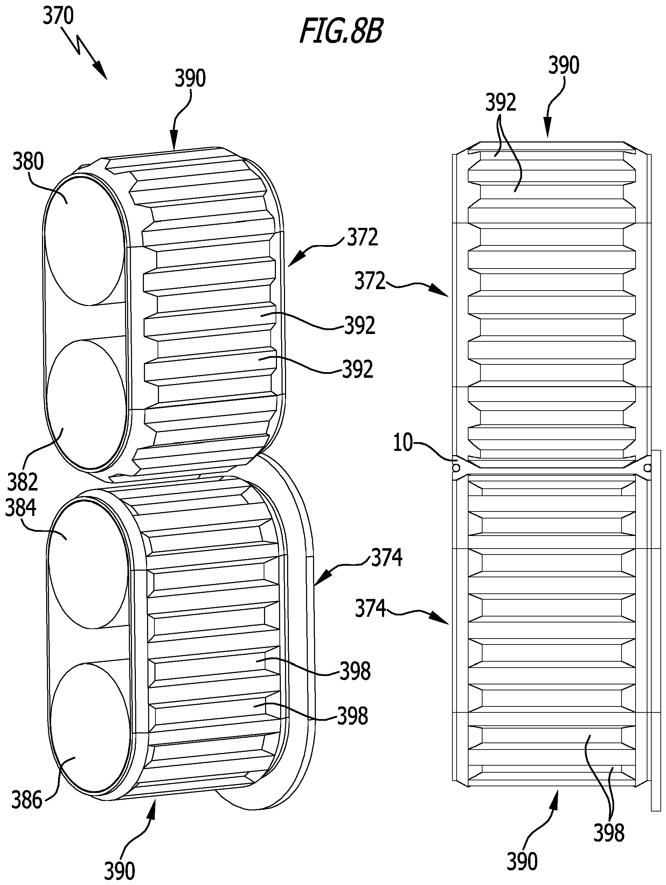

Figur 8B zeigt ein alternatives Prägewerkzeug 370, welches bei einer kontinuierlichen Umformung von auf die Umformtemperatur aufgeheizten Rohlingen 10 eingesetzt werden kann.

Das Prägewerkzeug 370 umfasst zwei Gliederketten 372, 374, welche über Umlenkrollen 380, 382 bzw. 384, 386 umlaufend geführt werden, wobei die erste Gliederkette 372 an ihrer Außenseite 390 Erhebungen 392 und die zweite Gliederkette an ihrer Außenseite 396 Vertiefungen 398 aufweist, die komplementär zu den Erhebungen 392 ausgestaltet sind.

An den Außenflächen 390, 396 der Gliederketten 372, 374 können wiederum Vertiefungen und Vorsprünge vorgesehen werden, die die Anschlussleisten 14, 16 der Isolierstege 10 schützen und gleichzeitig stützen.

Gegebenenfalls können die Umlenkrollen 382, 384 beheizt werden, um so beim Umformungsvorgang kontrollierte Temperaturbedingungen zu gewährleisten.

In der in der Figur 8B rechts dargestellten Frontansicht ist der Isoliersteg 10 mit abgebildet.

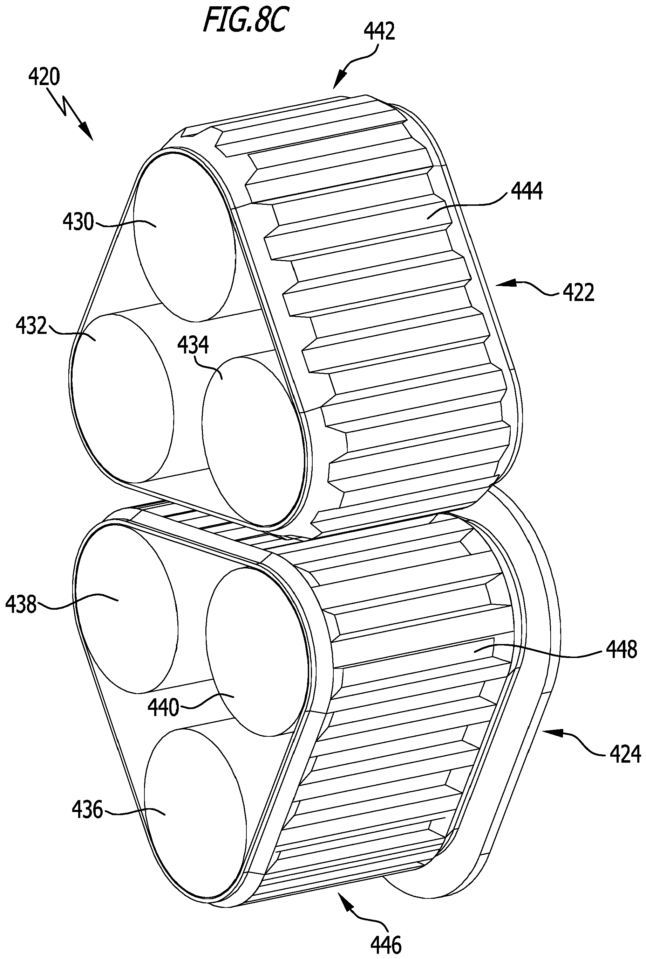

Figur 8C zeigt schließlich ein Prägewerkzeug 420, bei welchem ebenfalls zwei Gliederketten 422, 424 vorhanden sind. In diesem Ausführungsbeispiel werden die Gliederketten jeweils über drei Umlenkrollen 430, 432, 434 bzw. 436, 438, 440 umlaufend geführt, wobei die erste Gliederkette 422 an ihrer Außenseite 442 Erhebungen 444 und die zweite Gliederkette 424 an ihrer Außenseite 446 Vertiefungen 448 aufweist, die komplementär zu den Erhebungen 444 ausgestaltet sind.

In diesem Ausführungsbeispiel sind zwei der Umlenkrollen 432, 434 bzw. 438, 440 mit einer Prägekraft beaufschlagbar, so dass die Umformung in zwei aufeinanderfolgenden Stufen erfolgen kann. Die Umlenkrollen, die für den ersten Umformungsschritt sorgen, sind vorzugsweise auf eine höhere Temperatur aufgeheizt als die für den zweiten Umformungsschritt vorgesehenen.

An den Außenflächen der Gliederketten 422, 424 können wiederum Vertiefungen und Vorsprünge (nicht gezeigt) vorgesehen werden, die die Anschlussleisten 14, 16 der Isolierstege 10 schützen und gleichzeitig stützen.

Im Vorstehenden wurden die Prägevorrichtungen als einzelne Vorrichtungen beschrieben. Um die von den Prägevorrichtungen belegten Fertigungsflächen möglichst gut zu nutzen kann auch vorgesehen sein, dass zwei und mehr Prägevorrichtungen parallel nebeneinander aufgestellt und betrieben werden.

Darüber hinaus kann erfindungsgemäß vorgesehen sein, dass die Isoliersteg-Rohlinge 10 nach der Extrusion nicht auf Umgebungstemperatur abgekühlt und gegebenenfalls gelagert werden, sondern im Wesentlichen unmittelbar den Prägevorrichtungen zur Umformung zugeführt werden. Energetisch besonders bevorzugt ist dabei, die Isoliersteg-Rohlinge 10 mit einem gewissen Restwärmeanteil direkt in die Prägevorrichtungen einzuführen, so dass schon mit einer einstufigen Heizvorrichtung derselbe Effekt erzielbar ist, für den ansonsten eine zweistufige Heizvorrichtung notwendig werden würde.

## Patentansprüche

1. Verfahren zur Herstellung eines Isolierstegs (10) aus einem thermoplastischen Kunststoffmaterial, wobei der Isoliersteg einen streifenförmigen Basiskörper (12) aufweist, an dessen gegenüberliegenden Längskanten Anschlussleisten (14; 16) angeformt sind, und wobei der Basiskörper (12), in Längsrichtung des Isolierstegs (10) gesehen, alternierend mit Erhebungen (26) und Vertiefungen (28) ausgebildet ist, wobei in dem Verfahren der Isoliersteg (10) in einem ersten Schritt als Rohling mit einer im Wesentlichen ebenen Struktur des Basiskörpers (12) ohne Erhebungen und Vertiefungen, jedoch mit den Anschlussleisten (14; 16) ausgeformt und anschließend auf eine Temperatur entsprechend der maximalen Dauergebrauchstemperatur des Kunststoffmaterials oder weniger abgekühlt wird,
wobei der Basiskörper (12) des Isoliersteg-Rohlings in einem folgenden Schritt auf eine Umformtemperatur erwärmt wird, welche im Falle von (teil)kristallinen Kunststoffmaterialien ca. 30 °C unterhalb der Kristallitschmelztemperatur des Kunststoffmaterials oder höher und im Falle von amorphen Kunststoffmaterialien ca. 30 °C oberhalb der Erweichungstemperatur oder höher gewählt wird,
wobei der Basiskörper (12) anschließend zur Herstellung der alternierenden Erhebungen (26) und Vertiefungen (28) mit einem Werkzeug umgeformt wird, wobei die Geometrie der Anschlussleisten (14; 16) erhalten wird,
und wobei der Isoliersteg (10) nachfolgend auf eine Temperatur entsprechend der maximalen Dauergebrauchstemperatur oder weniger abgekühlt wird.

2. Verfahren nach Anspruch 1, **dadurch gekennzeichnet, dass** beim Umformen die alternierenden Erhebungen (26) und Vertiefungen (28) in Längsrichtung des Isolierstegs (10) gesehen in regelmäßigen Abständen ausgebildet werden,
wobei optional die Erhebungen (26) und Vertiefungen (28) derart ausgebildet werden, dass sie sich im Wesentlichen über die gesamte Breite des Basiskörpers (12) erstrecken,
wobei bevorzugt sich die Erhebungen (26) und Vertiefungen (28) im Wesentlichen senkrecht zur Längsrichtung des Isolierstegs (10) erstrecken.

3. Verfahren nach Anspruch 1 oder 2, **dadurch gekennzeichnet, dass** der Isoliersteg-Rohling zunächst auf eine Temperatur von ca. 50 °C oder weniger abgekühlt wird.

4. Verfahren nach einem der Ansprüche 1 bis 3, **dadurch gekennzeichnet, dass** die Anschlussleisten (14; 16) während dem Erwärmen des Basiskörpers (12) auf die Umformtemperatur gegen Wärmeeintrag geschützt werden, wobei die Anschlussleisten dabei vorzugsweise auf einer Temperatur entsprechend der maximalen Dauergebrauchstemperatur oder weniger gehalten werden,
oder dass die Anschlussleisten (14; 16) während dem Erwärmen des Basiskörpers (12) auf die Umformtemperatur und während der Umformung gegen Wärmeeintrag geschützt werden, wobei die Anschlussleisten dabei vorzugsweise auf einer Temperatur entsprechend der maximalen Dauergebrauchstemperatur oder weniger gehalten werden.

5. Verfahren nach einem der Ansprüche 1 bis 4, **dadurch gekennzeichnet, dass** die Umformtemperatur bei einem (teil)kristallinen Kunststoffmaterial auf einen Wert von ca. 30 °C oberhalb der Kristallitschmelztemperatur und bei einem amorphen Kunststoffmaterial auf einen Wert von ca. 60 °C oberhalb der Erweichungstemperatur begrenzt wird.

6. Verfahren nach einem der Ansprüche 1 bis 5, **dadurch gekennzeichnet, dass** der Basiskörper (12) mittels Strahlung, Konvektion, Ultraschall oder Kontaktwärme auf die Umformtemperatur erwärmt wird, wobei optional der Energieeintrag beim Erwärmen des Basiskörpers (12) auf zwei gegenüberliegenden Seiten des Basiskörpers (12) erfolgt.

7. Verfahren nach einem der Ansprüche 1 bis 6, **dadurch gekennzeichnet, dass** das zur Umformung des Basiskörpers (12) verwendete Werkzeug temperiert wird, wobei die Temperatur des Werkzeugs insbesondere auf einer Temperatur gehalten wird, die niedriger ist als ca. 120 °C, weiter bevorzugt ca. 100 °C, am meisten bevorzugt ca. 90 °C oder niedriger ist,
wobei bevorzugt das Werkzeug auf einer Temperatur im Bereich von ca. 50 °C bis ca. 120 °C gehalten wird, weiter bevorzugt in einem Bereich von ca. 50 °C bis ca. 80 °C.

8. Verfahren nach einem der Ansprüche 1 bis 7, **dadurch gekennzeichnet, dass** der Isoliersteg (10) nach der Umformung auf eine Temperatur von ca. 50 °C oder weniger abgekühlt wird.

9. Verfahren nach einem der Ansprüche 1 bis 8, **dadurch gekennzeichnet, dass** als thermoplastisches Kunststoffmaterial ein Material verwendet wird, ausgewählt aus Polyamiden (PA), insbesondere PA 12 und PA 6.6, Polypropylen (PP), Acrylnitril-Butadien-Styrol-Copolymere (ABS), Polyphenylenether (PPE), syndiotaktisches Polystyrol (sPS), Polyvinylchlorid (PVC), Polyester, insbesondere Polyethylenterephthalat (PET) und Polybutylenterephthalat (PBT), Polyketone, thermoplastische Polyurethane (TPU) sowie Blends der vorgenannten Polymeren.

10. Verfahren nach einem der Ansprüche 1 bis 9, **dadurch gekennzeichnet, dass** das Kunststoffmaterial ein kompaktes, im Wesentlichen porenfreies Material ist.

11. Verfahren nach einem der Ansprüche 1 bis 9, **dadurch gekennzeichnet, dass** das Kunststoffmaterial zumindest in einem Bereich des Isolierstegs, insbesondere im Basiskörper (12) des Isolierstegs (10), als poröses Material vorliegt,
wobei bevorzugt das poröse Kunststoffmaterial des Isolierstegs ein Porenvolumen im Bereich von ca. 5 bis 30 Vol.-%, vorzugsweise ca. 5 bis ca. 25 Vol.-%, weiter bevorzugt ca. 5 bis ca. 20 Vol.-%, aufweist,
wobei insbesondere das poröse Kunststoffmaterial des Isolierstegs (10) eine mittlere Porengröße von ca. 5 µm bis ca. 150 µm, insbesondere ca. 20 µm bis ca. 140 µm, aufweist.

12. Verfahren nach einem der Ansprüche 1 bis 11, **dadurch gekennzeichnet, dass** das thermoplastische Kunststoffmaterial ein oder mehrere Additive umfasst, insbesondere ausgewählt aus Glasfasern, Mineralfasern, Kunststofffasern, insbesondere Aramidfasern, Kohlefasern, Glashohlkugeln, Brandschutzmitteln, sowie Bläh- und Treibmitteln,
wobei optional das thermoplastische Kunststoffmaterial einen Schlagzähmodifier umfasst.

13. Verfahren nach einem der Ansprüche 1 bis 12, **dadurch gekennzeichnet, dass** die Umformung als Tiefziehverfahren oder als Druckluftumformung durchgeführt wird,
wobei bevorzugt die Umformung mittels Prägewerkzeug, insbesondere in Form eines Prägestempels, eines Prägerads oder eines mehrgliedrigen, insbesondere kettenförmigen Prägewerkzeugs durchgeführt wird.

14. Verfahren nach einem der Ansprüche 1 bis 13, **dadurch gekennzeichnet, dass** der Isoliersteg-Rohling einer Trocknung unterworfen wird, bevor die Umformung durchgeführt wird,
wobei bevorzugt die Umformung des Isoliersteg-Rohlings kontinuierlich durchgeführt wird und/oder die Umformung des Isoliersteg-Rohlings in mehreren Schritten durchgeführt wird.

15. Verfahren nach einem der Ansprüche 1 bis 14, **dadurch gekennzeichnet, dass** ein Isoliersteg-Rohling mit einem vorgegebenen Anteil an Restwärme aus dem Extrusionsprozess direkt der Prägevorrichtung zugeführt wird.

## Claims

1. Method for manufacturing an insulating bar (10) made from a thermoplastic plastics material, wherein the insulating bar has a strip-like base body (12) and, integrally formed on the opposite longitudinal edges thereof, connection strips (14; 16), and wherein the base body (12) is constructed alternately with raised portions (26) and recesses (28), as seen in the longitudinal direction of the insulating bar (10), wherein in the method in a first step the insulating bar (10) is shaped as a blank having a substantially planar structure of the base body (12) without raised portions and recesses but with the connection strips (14; 16) and is then cooled to a temperature corresponding to the maximum long-term service temperature of the plastics material or lower,
wherein in a subsequent step, the base body (12) of the insulating bar blank is heated to a forming temperature which, in the case of (partially) crystalline plastics materials, is selected to be approximately 30 °C below the crystallite melting point of the plastics material or higher, and in the case of amorphous plastics materials is selected to be approximately 30 °C above the softening point or higher,
wherein the base body (12) is then formed by means of a tool to produce the alternating raised portions (26) and recesses (28), wherein the geometry of the connection strips (14; 16) is retained,
and wherein the insulating bar (10) is then cooled to a temperature corresponding to the maximum long-term service temperature or lower.

2. Method according to Claim 1, **characterised in that** during forming, the alternating raised portions and recesses are produced at regular intervals, as seen in the longitudinal direction of the insulating bar (10),
optionally wherein the raised portions (26) and recesses (28) are produced such that they extend substantially over the entire width of the base body (12),
preferably wherein the raised portions (26) and recesses (28) extend substantially perpendicular to the longitudinal direction of the insulating bar (10).

3. Method according to one of Claims 1 or 2, **characterised in that** the insulating bar blank is first cooled to a temperature of approximately 50 °C or less.

4. Method according to one of Claims 1 to 3, **characterised in that** during the heating of the base body (12) to the forming temperature, the connection strips (14; 16) are protected from the introduction of heat, during which the connection strips are preferably kept at a temperature that corresponds to the maximum long-term service temperature or less,
or **in that** during heating of the base body (12) to the forming temperature and during forming, the connection strips are protected from the introduction of heat, during which the connection strips are preferably kept at a temperature that corresponds to the maximum long-term service temperature or lower.

5. Method according to one of Claims 1 to 4, **characterised in that**, in the case of a (partially) crystalline plastics material, the forming temperature is limited to a value approximately 30 °C above the crystallite melting point, and in the case of an amorphous plastics material, it is limited to a value approximately 60 °C above the softening point.

6. Method according to one of Claims 1 to 5, **characterised in that** the base body (12) is heated to the forming temperature by means of radiation, convection, ultrasound or contact heating, optionally wherein the introduction of energy during heating of the base body (12) is performed on two opposite sides of the base body (12).

7. Method according to one of Claims 1 to 6, **characterised in that** the tool that is used for forming the base body undergoes a temperature control, wherein the temperature of the tool is in particular kept at a temperature that is lower than approximately 120 °C, further preferably approximately 100°C, most preferably approximately 90 °C or lower,
preferably wherein the tool is kept at a temperature in the range of approximately 50 °C to approximately 120 °C, further preferably in a range of approximately 50 °C to approximately 80 °C.

8. Method according to one of Claims 1 to 7, **characterised in that** after forming, the insulating bar (10) is cooled to a temperature of approximately 50 °C or less.

9. Method according to one of Claims 1 to 8, **characterised in that** as the thermoplastic plastics material there is used a material that is selected from polyamides (PA), in particular PA 12 and PA 6,6, polypropylene (PP), acrylonitrile butadiene styrene copolymers (ABS), polyphenylene ether (PPE), syndiotactic polystyrene (sPS), polyvinyl chloride (PVC), polyesters, in particular polyethylene terephthalate (PET) and polybutylene terephthalate (PBT), polyketones, thermoplastic polyurethanes (TPU) and blends of the above-mentioned polymers.

10. Method according to one of Claims 1 to 9, **characterised in that** the plastics material is a compact, substantially pore-free material.

11. Method according to one of Claims 1 to 9, **characterised in that** the plastics material is present as a porous material in at least a region of the insulating bar, in particular in the base body (12) of the insulating bar (10),
preferably wherein the porous plastics material of the insulating bar has a pore volume in the range of approximately 5 to 30 vol%, preferably approximately 5 to approximately 25 vol%, further preferably approximately 5 to approximately 20 vol%,
in particular wherein the porous plastics material of the insulating bar (10) has an average pore size of approximately 5 µm to approximately 150 µm, in particular approximately 20 µm to approximately 140 µm.

12. Method according to one of Claims 1 to 11, **characterised in that** the thermoplastic plastics material includes one or more additives, in particular selected from glass fibres, mineral fibres, plastics fibres, in particular aramid fibres, carbon fibres, hollow glass spheres, fire retardants and expansion and blowing agents,
optionally wherein the thermoplastic plastics material includes an impact modifier.

13. Method according to one of Claims 1 to 12, **characterised in that** the forming is carried out as a deep drawing method or as compressed air forming,
preferably wherein the forming is carried out by means of a stamping tool, in particular in the form of a stamping die, a stamping wheel or a multiple-part, in particular chain-shaped, stamping tool.

14. Method according to one of Claims 1 to 13, **characterised in that** the insulating bar blank undergoes a drying before the forming is carried out,
preferably wherein the forming of the insulating bar blank is carried out continuously and/or the forming of the insulating bar blank is carried out in a plurality of steps.

15. Method according to one of Claims 1 to 14, **characterised in that** an insulating bar blank having a predetermined amount of residual heat from the extrusion procedure is supplied directly to the stamping device.

## Revendications

1. Procédé pour fabriquer une traverse isolante (10) à partir d'un matériau de type matière synthétique thermoplastique, où la traverse isolante présente un corps de base (12) en forme de bande, sur les arêtes longitudinales opposées duquel sont formées des baguettes de jonction (14 ; 16), et où le corps de base (12), vu dans la direction longitudinale de la traverse isolante (10), est formé de manière alternée avec des protubérances (26) et des évidements (28), où dans le procédé la traverse isolante (10) est formée dans une première étape sous forme d'ébauche avec une structure du corps de base (12) sensiblement plane sans protubérances ni évidements, mais avec les baguettes de jonction (14 ; 16) puis est refroidie à une température correspondant à la température d'utilisation prolongée maximale du matériau de type matière synthétique ou moins,
où le corps de base (12) de l'ébauche de traverse isolante est chauffé dans une étape suivante à une température de façonnage qui, dans le cas de matériaux de type matière plastique (partiellement) cristallins est choisie environ 30°C au-dessous de la température de fusion des cristallites du matériau de type matière synthétique ou plus haut et dans le cas de matériaux de type matière synthétique amorphes environ 30°C au-dessus de la température de ramollissement ou plus haut,
où le corps de base (12) est ensuite façonné avec un outil pour la fabrication des protubérances (26) et des évidements (28) alternés, où la géométrie des baguettes de jonction (14 ; 16) est maintenue,
et où la traverse isolante (10) est ensuite refroidie à une température correspondant à la température d'utilisation prolongée maximale ou moins.

2. Procédé selon la revendication 1, **caractérisé en ce que**, lors du façonnage, les protubérances (26) et les évidements (28) alternés, vus dans la direction longitudinale de la traverse isolante (10), sont formés à des distances régulières,
où éventuellement les protubérances (26) et les évidements (28) sont formés de telle manière qu'ils s'étendent sensiblement sur toute la largeur du corps de base (12),
où de préférence les protubérances (26) et les évidements (28) s'étendent sensiblement perpendiculairement à la direction longitudinale de la traverse isolante (10).

3. Procédé selon la revendication 1 ou 2, **caractérisé en ce que** l'ébauche de traverse isolante est d'abord refroidie à une température d'environ 50°C ou moins.

4. Procédé selon l'une des revendications 1 à 3, **caractérisé en ce que** les baguettes de jonction (14 ; 16) sont protégées contre l'entrée de chaleur pendant le chauffage du corps de base (12) à la température de façonnage, où les baguettes de jonction sont alors maintenues de préférence à une température correspondant à la température d'utilisation prolongée maximale ou moins,
ou bien **en ce que** les baguettes de jonction (14 ; 16) sont protégées contre l'entrée de chaleur pendant le chauffage du corps de base (12) à la température de façonnage et pendant le façonnage, où les baguettes de jonction sont alors maintenues de préférence à une température correspondant à la température d'utilisation prolongée maximale ou moins.

5. Procédé selon l'une des revendications 1 à 4, **caractérisé en ce que** la température de façonnage dans le cas d'un matériau de type matière synthétique (partiellement) cristallin est limitée à une valeur d'environ 30°C au-dessus de la température de fusion des cristallites et dans le cas d'un matériau de type matière synthétique amorphe à une valeur d'environ 60°C au-dessus de la température de ramollissement.

6. Procédé selon l'une des revendications 1 à 5, **caractérisé en ce que** le corps de base (12) est chauffé à la température de façonnage au moyen d'un rayonnement, de la convection, d'ultrasons ou de la chaleur de contact, où éventuellement l'entrée d'énergie lors du chauffage du corps de base (12) a lieu sur deux côtés opposés du corps de base (12).

7. Procédé selon l'une des revendications 1 à 6, **caractérisé en ce que** l'outil utilisé pour le façonnage du corps de base (12) est maintenu à une température constante, où la température de l'outil est maintenue en particulier à une température qui est plus basse qu'environ 120°C, de préférence encore environ 100°C, de manière particulièrement préférée environ 90°C ou plus basse,
où de préférence l'outil est maintenu à une température dans le domaine d'environ 50°C à environ 120°C, de préférence encore dans un domaine d'environ 50°C à environ 80°C.

8. Procédé selon l'une des revendications 1 à 7, **caractérisé en ce que** la traverse isolante (10) est refroidie après le façonnage à une température d'environ 50°C ou moins.

9. Procédé selon l'une des revendications 1 à 8, **caractérisé en ce qu'**un matériau choisi parmi les polyamides (PA), en particulier PA 12 et PA 6.6, le polypropylène (PP), les copolymères acrylonitrile-butadiène-styrène (ABS), le polyphénylèneéther (PPE), le polystyrène syndiotactique (sPS), le poly(chlorure de vinyle) (PVC), les polyesters, en particulier le polyéthylènetéréphtalate (PET) et le polybutylènetéréphtalate (PBT), les polycétones, les polyuréthanes thermoplastiques (TPU) ainsi que les mélanges des polymères précités est utilisé comme matériau de type matière synthétique thermoplastique.

10. Procédé selon l'une des revendications 1 à 9, **caractérisé en ce que** le matériau de type matière synthétique est un matériau compact, sensiblement sans pores.

11. Procédé selon l'une des revendications 1 à 9, **caractérisé en ce que** le matériau de type matière synthétique est présent sous forme de matériau poreux au moins dans un domaine de la traverse isolante, en particulier dans le corps de base (12) de la traverse isolante (10),
où de préférence le matériau de type matière synthétique poreux de la traverse isolante présente un volume de pores dans le domaine d'environ 5 à 30 % en volume, de préférence d'environ 5 à environ 25 % en volume, de préférence encore d'environ 5 à environ 20 % en volume,
où en particulier le matériau de type matière synthétique poreux de la traverse isolante (10) présente une dimension de pore moyenne d'environ 5 µm à environ 150 µm, en particulier d'environ 20 µm à environ 140 µm.

12. Procédé selon l'une des revendications 1 à 11, **caractérisé en ce que** le matériau de type matière synthétique thermoplastique comprend un ou plusieurs additifs, en particulier choisis parmi les fibres de verre, les fibres minérales, les fibres de matière synthétique, en particulier les fibres d'aramide, les fibres de carbone, les sphères creuses de verre, les agents ignifugeants, ainsi que les agents porogènes et gonflants,
où éventuellement le matériau de type matière synthétique thermoplastique comprend un modificateur de résistance aux chocs.

13. Procédé selon l'une des revendications 1 à 12, **caractérisé en ce que** le façonnage est réalisé sous forme de procédé d'emboutissage ou sous forme de façonnage à l'air comprimé,
où de préférence le façonnage est réalisé au moyen d'un outil d'estampage, en particulier sous forme d'un poinçon d'estampage, d'une roue d'estampage ou d'un outil d'estampage à plusieurs éléments, en particulier d'un outil d'estampage en forme de chaîne.

14. Procédé selon l'une des revendications 1 à 13, **caractérisé en ce que** l'ébauche de traverse isolante est soumise à un séchage, avant que le façonnage soit réalisé,
où de préférence le façonnage de l'ébauche de traverse isolante est réalisé de manière continue et/ou le façonnage de l'ébauche de traverse isolante est réalisé en plusieurs étapes.

15. Procédé selon l'une des revendications 1 à 14, **caractérisé en ce qu'**une ébauche de traverse isolante avec une proportion prédéterminée de chaleur résiduelle est envoyée du processus d'extrusion directement au dispositif d'estampage.
